# EUROPEAN PATENT APPLICATION

(11) **EP 3 808 481 A1**
(43) Date of publication of application: **21.04.2021**
(21) Application number: 20186925.2
(22) Date of filing: 21.07.2020
(51) Int. Cl.: B23C 5/10

(54) **RADIUS END MILL**

(30) Priority: 18.10.2019 JP 2019191268
(71) Applicant: UNION TOOL CO., Tokyo (JP)
(72) Inventor: SHIMIZU, Kazuya, Tokyo (JP); KOSHIO, Junichi, Tokyo (JP); OSAKI, Hideki, Tokyo (JP)
(74) Representative: Kramer Barske Schmidtchen Patentanwälte PartG mbB

(57) **Abstract**

An object of the present invention is to provide a radius end mill with which cutting marks are not apparent following a cutting process, with which glossy milled surfaces are obtained, and with which the amount of labor involved in a polishing process can be reduced. A radius end mill comprises an end cutting edge (1), a corner radius cutting edge (2) that is formed contiguous with a peripheral side of the end cutting edge (1), and a peripheral cutting edge (3) that is formed contiguous with the corner radius cutting edge (2). A corner radius wiper face (5) is provided running along the corner radius cutting edge (2) so as to be contiguous therewith. The corner radius wiper face (5) wipes a cut surface cut by said corner radius cutting edge (2).

## Description

### BACKGROUND OF INVENTION

### TECHNICAL FIELD

The present invention relates to a radius end mill.

### BACKGROUND ART

In radius end mills, an arcuate corner radius cutting edge is provided to a corner boundary between an end cutting edge and a peripheral cutting edge. Using the corner radius cutting edge, a radius end mill is able to mill curved surfaces and inclined surfaces similarly to a ball end mill, and with the end cutting edge and the peripheral cutting edge, a radius end mill can also perform face and side milling. Radius end mills are therefore employed in a variety of milling processes, such as roughing, semi-finishing, and final finishing (see Patent Document 1).

### [Prior Art Documents]

### [Patent Documents]

[Patent Document 1] Japanese Laid-open Patent Publication No. 11-216609

### SUMMARY OF THE INVENTION

### PROBLEMS TO BE SOLVED BY THE INVENTION

However, even with radius end mills employed in final finishing processes as mentioned above, cutting marks (cutter marks) may appear in a cut surface after a cutting process. For this reason, it has sometimes been necessary to remove cutting marks through a polishing process after a cutting process employing a radius end mill has been performed, and such polishing process is labor intensive.

The present invention was arrived at in view of the foregoing, it being an object hereof to provide a radius end mill with which cutting marks are not apparent following a cutting process, with which glossy milled surfaces are obtained, and with which the amount of labor involved in a polishing process can be reduced.

### MEANS FOR SOLVING THE PROBLEMS

The main points of the present invention are described below with reference to the accompanying drawings.

The invention according to a first aspect relates to a radius end mill comprising an end cutting edge 1, a corner radius cutting edge 2 that is formed contiguous with a peripheral side of the end cutting edge 1, and a peripheral cutting edge 3 that is formed contiguous with the corner radius cutting edge 2, the radius end mill being characterized in that a corner radius wiper face 5 is provided running along the corner radius cutting edge 2 so as to be contiguous therewith, the corner radius wiper face 5 wiping a cut surface cut by said corner radius cutting edge 2.

The invention according to a second aspect relates to the radius end mill according to the first aspect, further characterized in that an end wiper face 4 is provided running along the end cutting edge 1 so as to be contiguous therewith, the end wiper face 4 wiping a cut surface cut by said end cutting edge 1.

The invention according to a third aspect relates to the radius end mill according to the second aspect, further characterized in that a width of the end wiper face 4 in a direction at a right angle to the end cutting edge is set to less than 0.02 mm.

The invention according to a fourth aspect relates to the radius end mill according to either one of the second and third aspects, further characterized in that the end wiper face 4 is provided contiguous with the corner radius wiper face 5, and the end wiper face 4 narrows in width on progression toward a tool center side from a corner radius cutting edge side.

The invention according to a fifth aspect relates to the radius end mill according to any one of the second to fourth aspects, further characterized in that a peripheral wiper face 6 is provided running along the peripheral cutting edge 3 so as to be contiguous therewith, the peripheral wiper face 6 wiping a cut surface cut by said peripheral cutting edge 3.

The invention according to a sixth aspect relates to the radius end mill according to the fifth aspect, further characterized in that a width of the peripheral wiper face 6 is set wider than the width of the end wiper face 4.

The invention according to a seventh aspect relates to the radius end mill according to either one of the fifth and sixth aspects, further characterized in that a width of the peripheral wiper face 6 in a direction at a right angle to the peripheral cutting edge is set to greater than or equal to 0.02 mm but less than or equal to 25% of a tool diameter.

The invention according to an eighth aspect relates to the radius end mill according to any one of the second to seventh aspects, further characterized in that the end cutting edge 1 has a first dish angle region 7 with a dish angle α and a second dish angle region 8 with a dish angle β (α<β), and the end wiper face 4 is provided in the first dish angle region 7.

The invention according to a ninth aspect relates to the radius end mill according to any one of the first to eighth aspects, further characterized in that the corner radius wiper face 5, in a direction at a right angle to the corner radius cutting edge, narrows in width on progression toward a tool center side from a peripheral side.

### EFFECT OF THE INVENTION

As a result of the configuration described above, the surface roughness of milled surfaces cut by the corner radius cutting edge is reduced, and glossy milled surfaces in which cutting marks are not apparent can be obtained. The present invention thus realizes a commercially viable radius end mill with which the amount of labor involved in a polishing process is reduced and productivity is improved.

### BRIEF DESCRIPTION OF THE DRAWINGS

FIG. 1 shows a schematic explanatory perspective view illustrating a cutting part of a working example;
FIG. 2 shows schematic explanatory views (plan view, left side view, and front view) illustrating the cutting part of the working example;
FIG. 3 shows photographs indicating a result of a comparison of surface conditions for milled surfaces produced by end cutting edges of the working example and a prior art product;
FIG. 4 shows a graph indicating a result of a comparison of surface roughness for milled surfaces produced by end cutting edges of the working example and a prior art product;
FIG. 5 shows a table indicating a result of tests comparing surface conditions for milled surfaces produced by end cutting edges of the working example and a prior art product;
FIG. 6 shows photographs indicating a result of tests comparing surface conditions for milled surfaces produced by end cutting edges of the working example and that with conventional specifications;
FIG. 7 shows a table indicating a result of tests comparing surface conditions for milled surfaces produced by end cutting edges of the working example and that with conventional specifications;
FIG. 8 shows a table and photographs that indicate a result of tests comparing surface conditions for milled surfaces produced by peripheral cutting edges of the working example and a prior art product;
FIG. 9 shows a table indicating a result of tests comparing surface conditions for milled surfaces produced by peripheral cutting edges of the working example and a prior art product;
FIG. 10 is a diagram for explaining milling positions of a corner radius cutting edge when an inclined surface is milled with the corner radius cutting edge;
FIG. 11 shows a table and photographs that indicate a result of tests comparing surface conditions for milled surfaces produced by corner radius cutting edges of the working example and a prior art product;
FIG. 12 shows a table indicating a result of tests comparing surface conditions for milled surfaces produced by corner radius cutting edges of the working example and a prior art product;
FIG. 13 shows a graph indicating a result of a comparison of surface roughness for milled surfaces (15° inclined surfaces) produced by corner radius cutting edges of the working example and a prior art product; and
FIG. 14 is a diagram for explaining milled surfaces that have been milled by respective cutting edges and wiper faces.

### BEST MODE FOR CARRYING OUT THE INVENTION

A preferred embodiment of the present invention is briefly described below with reference to the drawings while indicating the effects of the present invention.

In the present invention, a corner radius wiper face 5 is provided running along a corner radius cutting edge 2 at the rear of the corner radius cutting edge 2 in a direction of tool rotation, and accordingly, the corner radius wiper face 5 wipes a cut surface (the corner radius wiper face 5 rubs the cut surface) that has been cut by the corner radius cutting edge 2 (corner radius cutting edge cut surface). As a result of this wiping action (rubbing action) of the corner radius wiper face 5, the surface roughness of the corner radius cutting edge cut surface is reduced, and glossy milled surfaces in which cutting marks are not apparent can be obtained.

Thus, because a glossy milled surface is obtained in which cutting marks in a corner radius cutting edge cut surface are not apparent due to the wiping action of the corner radius wiper face 5, the present invention realizes a commercially viable radius end mill with which the amount of labor involved in a polishing process can be reduced and productivity is improved.

### EXAMPLES

A specific example of the present invention is described below with reference to the drawings.

This working example relates to a radius end mill comprising an end cutting edge 1, a corner radius cutting edge 2 that is formed contiguous with a peripheral side of the end cutting edge 1, and a peripheral cutting edge 3 that is formed contiguous with the corner radius cutting edge, wherein a corner radius wiper face 5 is provided running along the corner radius cutting edge 2 so as to be contiguous therewith, the corner radius wiper face 5 wiping a cut surface immediately after having been cut by the corner radius cutting edge 2.

In the working example, an end wiper face 4 is provided running along the end cutting edge 1 so as to be contiguous therewith, and a peripheral wiper face 6 is provided running along the peripheral cutting edge 3 so as to be contiguous therewith. The end wiper face 4 wipes a cut surface immediately after having been cut by the end cutting edge 1, and the peripheral wiper face 6 wipes a cut surface immediately after having been cut by the peripheral cutting edge 3.

Specifically, the corner radius wiper face 5, the end wiper face 4, and the peripheral wiper face 6 are provided contiguous with the corner radius cutting edge 2, the end cutting edge 1, and the peripheral cutting edge 3, respectively, at the rear thereof in the direction of tool rotation.

In other words, the working example relates to a radius end mill comprising an end cutting edge 1, a corner radius cutting edge 2 that is formed contiguous with a peripheral side of the end cutting edge 1, and a peripheral cutting edge 3 that is formed contiguous with the corner radius cutting edge 2. An end wiper face 4 is provided running along the end cutting edge 1 so as to be contiguous therewith, a corner radius wiper face 5 is provided running along the corner radius cutting edge 2 so as to be contiguous therewith, and a peripheral wiper face 6 is provided running along the peripheral cutting edge 3 so as to be contiguous therewith. The end wiper face 4 wipes a cut surface immediately after having been cut by the end cutting edge 1, the corner radius wiper face 5 wipes a cut surface immediately after having been cut by the corner radius cutting edge 2, and the peripheral wiper face 6 wipes a cut surface immediately after having been cut by the peripheral cutting edge 3. The radius end mill is configured such that, as a result of a wiping action by the wiper faces provided contiguous with respective cutting edges on cut surfaces that have been cut by the cutting edges, the appearance of cutting marks during a cutting process is suppressed by a burnishing effect, and glossy milled surfaces are obtained.

The constituent parts of the working example will be described in detail below.

The working example has a configuration in which a cutting part 10 is provided, across a neck part (not shown), at an end of a shank part (not shown) formed from a cemented carbide material. The cutting part 10 is formed from a cBN (cubic boron nitride) material suited to superhard material milling.

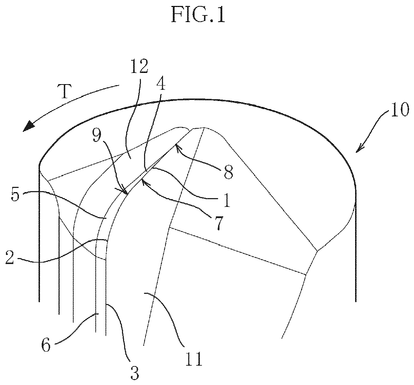

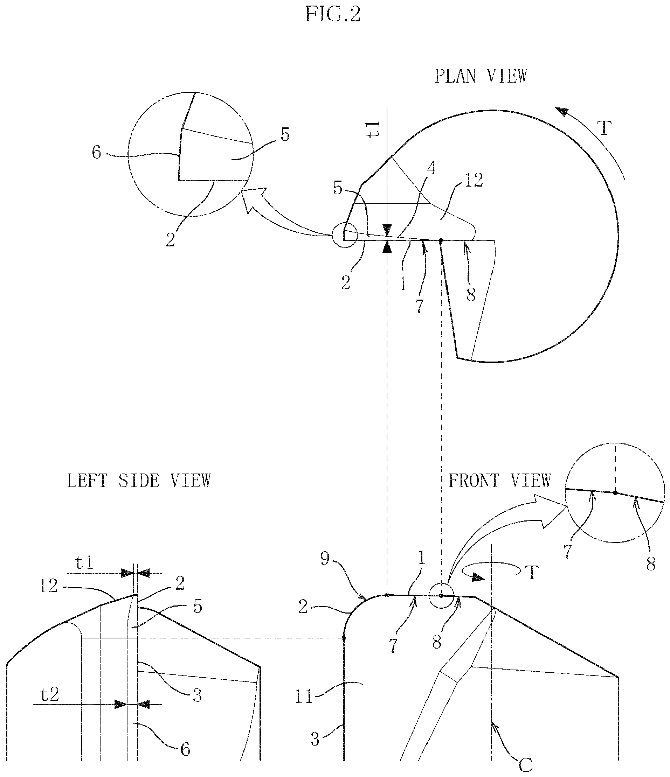

Described in detail on the basis of FIGs. 1 and 2, as shown in the drawings, the cutting part 10 is configured as a single cutting edge provided with one major cutting edge 9. The major cutting edge 9 is formed by the end cutting edge 1, the corner radius cutting edge 2 formed contiguous with the peripheral side of the end cutting edge 1, and the peripheral cutting edge 3 formed contiguous with the corner radius cutting edge 2 and running parallel to an axis of tool rotation C.

In other words, the peripheral cutting edge 3 is configured as a rectilinear edge, and is configured as a straight cutting edge whereby the path of rotation of the peripheral cutting edge 3 forms a cylindrical shape.

The material of the cutting part 10 is not limited to the cBN indicated in the working example, and another material may be used therefor. For example, the cutting part 10 may be made of the same cemented carbide as the shank part. The configuration of the cutting part 10 is also not limited to the single cutting edge indicated in the working example, and the cutting part 10 may be configured with plurality of major cutting edges, such as with two cutting edges or four cutting edges. The peripheral cutting edge 3 need not be a rectilinear edge, and may be a helical edge that is formed in a helical shape around the axis of tool rotation. In addition, the peripheral cutting edge 3 need not be a straight cutting edge whereby the path of rotation of the peripheral cutting edge 3 forms a cylindrical shape, and may be a tapered cutting edge whereby the path of rotation of the peripheral cutting edge 3 forms a tapered shape (conical shape).

A major cutting edge on a conventional radius end mill is formed by a rake face and a relief face. However, as shown in the drawings, the major cutting edge 9 of the working example, namely, the end cutting edge 1, which comprises a first dish angle region 7 and a second dish angle region 8, described later, the corner radius cutting edge 2, and the peripheral cutting edge 3, are each formed by a rake face 11 and a wiper face that is provided between the rake face 11 and a relief face 12.

Specifically, the end cutting edge 1 is formed by the rake face 11, the end wiper face 4, and the relief face 12; the corner radius cutting edge 2 is formed by the rake face 11 and the corner radius wiper face 5; and the peripheral cutting edge 3 is formed by the rake face 11 and the peripheral wiper face 6. Accordingly, as shown, in the working example the relief face 12 is formed contiguous with each wiper face at the rear thereof in the direction of tool rotation. However, the end wiper face 4 is not provided in the second dish angle region 8 of the end cutting edge 1, and here the rake face 11 and the relief face 12 are allowed to intersect. In the drawings, the direction of tool rotation is indicated by the arrow marked by reference sign T. In the working example, relief faces respectively corresponding to the end cutting edge 1 (second dish angle region 8 and end wiper face 4), the corner radius cutting edge 2 (corner radius wiper face 5), and the peripheral cutting edge 3 (peripheral wiper face 6) are collectively referred to as "relief face 12". These relief faces may be formed by a single surface lacking joint segments, such as a planar face or a curved face, or relief faces may be individually provided corresponding to the end cutting edge 1 (second dish angle region 8 and end wiper face 4), the corner radius cutting edge 2 (corner radius wiper face 5), and the peripheral cutting edge 3 (peripheral wiper face 6). Specifically, a relief face corresponding to the second dish angle region 8 of the end cutting edge 1 and a relief face corresponding to the end wiper face 4 of the end cutting edge 1 may be respectively provided so as to yield a multifaceted form, a relief face corresponding to the corner radius cutting edge 2 (corner radius wiper face 5) may be provided so as to be contiguous with the relief face corresponding to the end wiper face 4, and a relief face corresponding to the peripheral cutting edge 3 (peripheral wiper face 6) may be provided so as to be provided contiguous with the relief face corresponding to the corner radius cutting edge 2 (corner radius wiper face 5).

In addition, the end cutting edge 1 need not be provided with a second dish angle region 8. The end cutting edge 1 may be configured formed by the end wiper face 4 provided in the first dish angle region 7 and the rake face 11.

As shown, in the working example the rake face 11 is formed as a vertical face that is orthogonal to a direction at a right angle to the tool axis. However, a chamfer face may be provided at an upper side of the rake face and a rake angle may be set, as appropriate. For example, the chamfer face may be formed at the rake face such that the rake angle is a negative angle, or the chamfer face may be formed at the rake face such that the rake angle is a positive angle.

The wiper faces of the working example will now be described in detail. A width t1 of the end wiper face 4 forming the end cutting edge 1 is set to less than 0.02 mm, and the end wiper face 4 is formed so that what is called the relief angle is 0° and the end wiper face 4 is not angled rearward in the direction of tool rotation.

In other words, the end wiper face 4 is formed as a flat face that follows the path over which an intersection ridgeline rotates about the axis of tool rotation, the intersection ridgeline being where the end wiper face 4 and the rake face 11 of the end cutting edge 1 intersect (this is because when the width t1 is greater than or equal to 0.02 mm, cutting resistance and cutting heat/frictional heat become excessive, cutting marks are produced, and welding to the tool occurs, which causes the glossiness of the end cutting edge cut surface to be lost).

The end wiper face 4 is formed contiguous with the corner radius wiper face 5, described below, and in a direction following the end cutting edge 1 in plan view, a length of the end wiper face 4 from the position of the boundary with the corner radius wiper face 5 to a tool center side end of the end wiper face 4 is set to at least 4% of a length (overall end cutting edge length) of the end cutting edge 1 (the length of the first dish angle region 7 plus the length of the second dish angle region 8) (a wiping action is not sufficiently exhibited by the end wiper face 4 at lengths less than 4%).

Specifically, the end cutting edge 1 of the working example has a first dish angle region 7 (on a corner radius cutting edge side) with a dish angle α, and a second dish angle region 8 (on a tool center side) with a dish angle β that is greater than the dish angle α (α<β). The first dish angle region 7 and the second dish angle region 8 are inclined downward toward a base side of the tool on progression toward the tool center side. The end wiper face 4 is formed only in the first dish angle region 7 positioned on the corner radius cutting edge side.

The end wiper face 4 of the working example also gradually narrows in width on progression toward a tool center side from a corner radius wiper face 5 side, and as shown, has a shape that presents a substantially triangular form in plan view.

The shape of the end wiper face 4 in plan view is able to be set, as appropriate, according to the arrangement of the part of the relief face 12 formed at the rear of the end cutting edge 1 in the direction of tool rotation and provided contiguous with the end wiper face 4.

In other words, the relief face 12 is provided such that the width t1 of the end wiper face 4 of the working example is set having a maximum dimension (less than 0.02 mm) at the position of the boundary with the corner radius wiper face 5, the end wiper face 4 gradually narrows in width on progression therefrom toward the tool center side, and the width of the end wiper face 4 reaches a minimum value at the position of the boundary between the first dish angle region 7 and the second dish angle region 8, and such that the end wiper face 4 is not present (is not formed) in the second dish angle region 8. Accordingly, the end cutting edge 1 of the working example is formed by the end wiper face 4 being provided intersecting the rake face 11 in the first dish angle region 7, and, similarly to a conventional radius end mill, the end cutting edge 1 is formed by the rake face 11 and the relief face 12 in the second dish angle region 8.

The end wiper face 4 may be configured such that the shape thereof is not the substantially triangular shape of the example above, but is a shape with a width that does not change on progression along the end cutting edge 1 toward the tool center side from the corner radius wiper face 5 side, and in plan view presents a substantially quadrangular form (a strip shape). In such case, specifically, the width t1 of the end wiper face 4 at rake angle α is set having a maximum dimension (less than 0.02 mm) at the position of the boundary with the corner radius wiper face 5, a relief face (provided contiguous with the end wiper face 4 at the rear thereof in the direction of tool rotation) corresponding to the first dish angle region 7 of the end cutting edge 1 is formed at a desired relief angle such that the width of the end wiper face 4 does not change on progression therefrom toward the tool center side, and a relief face corresponding to the second dish angle region 8 is provided so as to have a rake angle β (α<β) and to intersect the rake face 11 at a desired relief angle. The end wiper face 4 is thereby able to be formed with a shape (strip shape) that presents a substantially quadrangular form in plan view. The relief face corresponding to the end cutting edge 1 thus takes on a dual-faced form formed with an intersection ridgeline between relief faces at a boundary between the relief face corresponding to the first dish angle region 7 and the relief face corresponding to the second dish angle region 8.

As a result of configuring the end wiper face 4 in the above manner, in other words, by minimizing a wiping region (wiping surface area) of the end wiper face 4, cutting resistance and cutting heat/frictional heat arising when the end wiper face 4 wipes a cut surface produced by the end cutting edge 1 is reduced, the appearance of cutting marks in the cut surface produced by the end cutting edge 1 is suppressed, and a glossy milled surface can be obtained. Furthermore, where the end wiper face 4 has a shape that presents a substantially triangular form in plan view gradually narrowing in width on progression toward the tool center side from the corner radius wiper face 5 side, an even better milled surface can be obtained. This is because when the tool is caused to rotate at a prescribed rotational speed during a cutting process, the cutting speed (peripheral speed) is lower at the tool center than at the tool periphery. Thus, compared to the tool periphery, a sufficient cutting ability cannot be achieved at the tool center. Moreover, when the width of the end wiper face 4 at the tool center side is made equal to the width of the end wiper face 4 at the tool periphery side (on the corner radius wiper face side), cutting resistance is caused to increase and a good milled surface cannot be obtained. For this reason, it is preferable that the end wiper face 4 be appropriately configured, such as by being given a shape that presents a substantially triangular form in plan view gradually narrowing in width on progression toward the tool center side from the corner radius wiper face 5 side, and by the length of the end wiper face 4 being set to an appropriate length.

Although it is possible to set the length of the end wiper face 4, as described above, to an appropriate length depending on the length of the end cutting edge 1, the width of the end wiper face 4 is always set to less than 0.02 mm regardless of tool diameter.

In cases in which a radius end mill is used in a typical three-axis machining center, the end cutting edge mills a bottom surface; the corner radius cutting edge mills inclined surfaces, corner radius surfaces, and curved surfaces; and the peripheral cutting edge mills side surfaces (vertical surfaces). Due to the tool being rotated, the corner radius cutting edge and the peripheral cutting edge make intermittent contact with a workpiece. However, in cases in which milling is performed using the end cutting edge, the end cutting edge makes continuous contact with the workpiece, load due to cutting heat/frictional heat and cutting resistance thus continuously acts on the blade edge, inducing welding and damage to the blade edge, and the milled surface is liable to be roughened.

In cases in which wiper faces are provided, because the blade edges of the corner radius cutting edge and the peripheral cutting edge making intermittent contact come away from the workpiece and are cooled by a coolant, the wiper faces corresponding thereto are able to have greater widths. However, because the end cutting edge that makes continuous contact faces an increased risk of welding/damage to the blade edge if the width of the corresponding wiper face is increased, this wiper face needs to have a small width.

The amount of time that the corner radius cutting edge and the peripheral cutting edge are in contact with the workpiece is able to be changed in accordance with the peripheral speed and cutting depth, which are decided based on a combination of tool diameter and rotational speed; however, the amount of time that the end cutting edge is in contact with the workpiece does not change in accordance with the tool diameter, so the width of the end wiper face is preferably a small width less than 0.02 mm regardless of tool diameter.

A width of the peripheral wiper face 6 forming the peripheral cutting edge 3 is set wider than that of the end cutting edge 1 described above, and the peripheral wiper face 6 is formed in a cylindrical surface that follows the path of rotation of the peripheral cutting edge 3 about the axis of tool rotation.

Specifically, a width t2 of the peripheral wiper face 6 in a direction at a right angle to the peripheral cutting edge (a direction at a right angle to the cutting edge of the peripheral cutting edge 3) is set greater than or equal to 0.02 mm but less than or equal to 25% of the tool diameter, and as shown, the peripheral wiper face 6 is formed in a strip shape. The peripheral wiper face does not exhibit a sufficient wiping effect at a width t2 of less than 0.02 mm, and a width t2 exceeding 25% of the tool diameter is linked to gouging of the milled surface and chips being welded to the tool, and so a glossy milled surface cannot be obtained in such cases.

In other words, the end wiper face 4 of the end cutting edge 1 described above is configured as above in order to minimize the wiping surface area thereof because the end wiper face 4 makes continuous contact with the workpiece during a cutting process, and if there is a large wiping surface area, there is a concern that cutting resistance and cutting heat/frictional heat will become excessive, the cut surface will be roughened, and welding will occur. However, because the peripheral wiper face 6 and the corner radius wiper face 5 make intermittent contact with the workpiece, the abovementioned problems do not occur. The peripheral wiper face 6 and the corner radius wiper face 5 are accordingly configured such that the widths thereof are set wider than that of the end wiper face 4, the wiping surface areas thereof are larger than that of the end wiper face 4, a sufficient wiping action on the cut surfaces (milled surfaces) is ensured each time contact is made (contact time is increased), and a burnishing effect is satisfactorily exhibited.

The corner radius wiper face 5 forming the corner radius cutting edge 2 is formed in a curved surface following the path of rotation of the corner radius cutting edge 2 about the axis of tool rotation. The corner radius wiper face 5 is formed between the end wiper face 4 and the peripheral wiper face 6 described above such that one end touches the end wiper face 4 and another end touches the peripheral wiper face 6.

Specifically, as shown, the corner radius wiper face 5 of the working example narrows in width in a direction at a right angle to the corner radius cutting edge (a direction at a right angle to the corner radius cutting edge 2) on progression toward a tool center side from a peripheral side. Expressed differently, the corner radius wiper face 5 is configured such that the width thereof is set widest at the position of the boundary with the peripheral wiper face 6 (equal to the width t2 of the peripheral wiper face 6, i.e., greater than or equal to 0.02 mm but less than or equal to 25% of the tool diameter), the corner radius wiper face 5 gradually narrows in width on progression therefrom toward the end wiper face 4 side, the width of the corner radius wiper face 5 is set narrowest at the position of the boundary with the end wiper face 4 (equal to the width t1 at the end of the end wiper face 4 at the corner radius wiper face side end thereof (at the position of the boundary), i.e., less than 0.02 mm), and the corner radius wiper face 5 forms a wiper face that has continuity with the end wiper face 4 and the peripheral wiper face 6. The width of the corner radius wiper face 5 should be greater than or equal to the width t1 of the end wiper face 4 at the corner radius wiper face side end of (at the position of the boundary with) the end wiper face 4 but less than or equal to the width t2 of the peripheral wiper face 6 at the position of the boundary with the peripheral wiper face 6. The corner radius wiper face 5 may, for example, be formed having a fixed width on progression toward the tool center side from the peripheral side, or may be formed expanding in width on progression toward the tool center side from the peripheral side. In other words, so long as the width of the corner radius wiper face 5 meets prescribed width dimensions above, the corner radius wiper face 5 may be formed repeatedly expanding/narrowing in width on progression toward the tool center side from the peripheral side.

As a result of the working example being configured in such manner, in a cutting process, cut surfaces (milled surfaces) that have been cut by the end cutting edge 1, the corner radius cutting edge 2, and the peripheral cutting edge 3 are respectively rubbed by the end wiper face 4, the corner radius wiper face 5, and the peripheral wiper face 6, and due to the wiper faces rubbing the cut surfaces, the surface roughness of the cut surfaces is low, and glossy milled surfaces in which cutting marks are not apparent can be obtained.

Moreover, in the working example, the surface area (width) of the end wiper face 4 is minimized (made narrow), and the end wiper face 4 is formed in a substantially triangular shape in plan view narrowing in width on progression toward the tool center side. Because of this, compared to giving the end wiper face 4 a fixed width, cutting resistance and cutting heat/frictional heat in a cutting process using the end cutting edge 1 is reduced, surface roughness is lowered, the appearance of cutting marks is more reliably prevented, and glossier milled surfaces can be more reliably obtained.

Accordingly, the working example realizes a commercially viable radius end mill with which cutting marks are not apparent in milled surfaces after being cut, and with which milled surfaces can be given a glossy finish.

Next, the effect of the working example will be described with reference to supporting test examples.

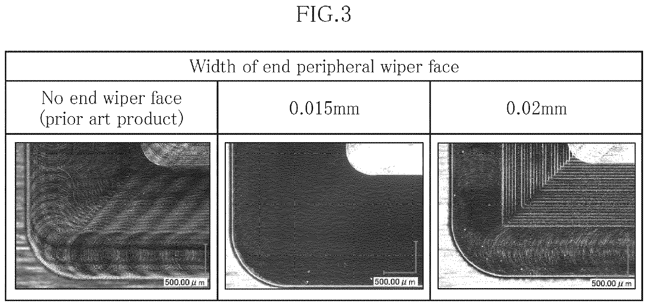

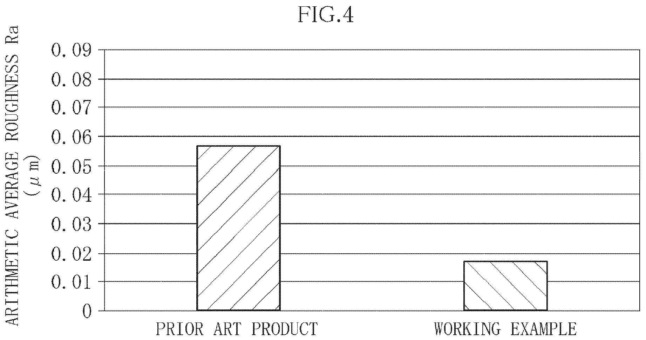

FIG. 3 indicates a result of tests comparing surface conditions (mainly, the presence of cutting marks) for milled surfaces produced by an end cutting edge of a conventional radius end mill without wiper faces (hereafter referred to as a prior art product), by an end cutting edge of the working example (width of end wiper face 4: 0.015 mm), and by an end cutting edge, serving as a comparative example, for which the width of the end wiper face has been set wider than in the working example (to 0.02 mm). FIG. 4 indicates a result of a numerical comparison of surface conditions in terms of surface roughness (arithmetic average roughness Ra) for the prior art product and the working example in these tests. The milling parameters used in these tests are as given below. Herein, ϕ represents tool diameter, and R represents the size (circular arc radius) of the radius of the corner radius cutting edge. Similar applies throughout.

### [Milling parameters]

Tool size: ϕ 2 × R 0.1 (mm)
Milling method: End milling
Spindle speed: 30,000 (rpm)
Feed rate: 375 (mm/min)
Workpiece: Hardened steel (59 HRC)

Through these tests, as indicated in FIG. 4, it was confirmed that with the working example, surface roughness improved to about 1/3rd of that of the prior art product, and as shown in FIG. 3, it was confirmed that the cutting marks (cutter marks) visible with the prior art product were not seen with the working example, and that there a definite improvement in surface condition.

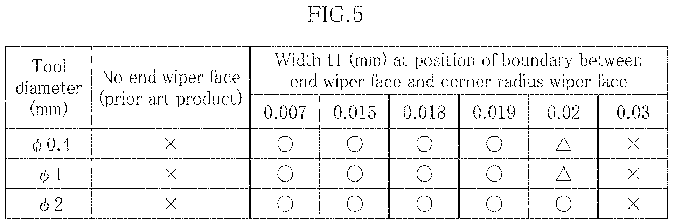

FIG. 5 indicates a result of tests comparing surface conditions (mainly, the presence of cutting marks) for milled surfaces produced by end cutting edges 1 with respect to the width t1 at the position of the boundary between an end wiper face 4 and a corner radius wiper face 5. As indicated in the milling parameters shown below, three radius end mills having differing tool sizes (tool diameters) were used in these tests, and the tests were performed together with tests looking into dependency on tool diameter. The confirmation of surface conditions was performed via a visual inspection. Surface condition was judged in comparison with that resulting from a prior art product without an end wiper face. The o-symbol is used to denote surface conditions that were glossy and for which cutting marks were practically not visible. The triangle symbol is used to denote surface conditions that were glossy, but for which cutting marks were visible. The x-symbol is used to denote surface conditions that were equally lacking in glossiness as that resulting from a prior art product without an end wiper face and for which cutting marks were visible.

### [Milling parameters]

Tool size: ϕ 0.4 × R 0.05 / ϕ 1 × R 0.1 / ϕ 2 × R 0.1 (mm)
Milling method: End milling
Spindle speed: 30,000 (rpm)
Feed rate: 100 / 187.5 / 375 (mm/min)
Workpiece: Hardened steel (59 HRC)

As indicated in FIG. 5, cutting marks were found to be produced by the radius end mill without a wiper face (the prior art product) and the radius end mills with a tool diameter of 0.4 and 1 (mm) when the width (maximum width) t1 in a direction at a right angle to the end cutting edge (in a direction at a right angle to the cutting edge of the end cutting edge 1) at the position of the boundary with the corner radius wiper face 5 was greater than or equal to 0.02 mm. When the width t1 was 0.007 mm to 0.019 mm, it was confirmed that regardless of the tool diameter, cutting marks were practically not visible, and that milled surfaces with good surface conditions were obtained.

Thus, from the two test results depicted in FIGs. 3 to 5, it was confirmed that the width t1 at the position of the boundary between the end wiper face 4 and the corner radius wiper face 5 is preferably set to less than 0.02 mm regardless of tool diameter.

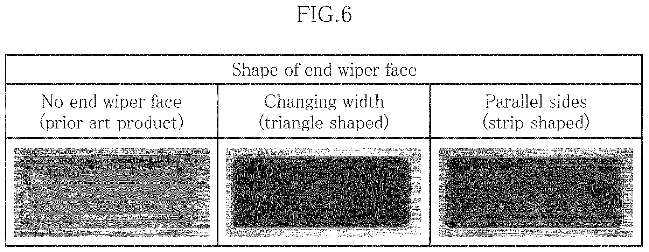

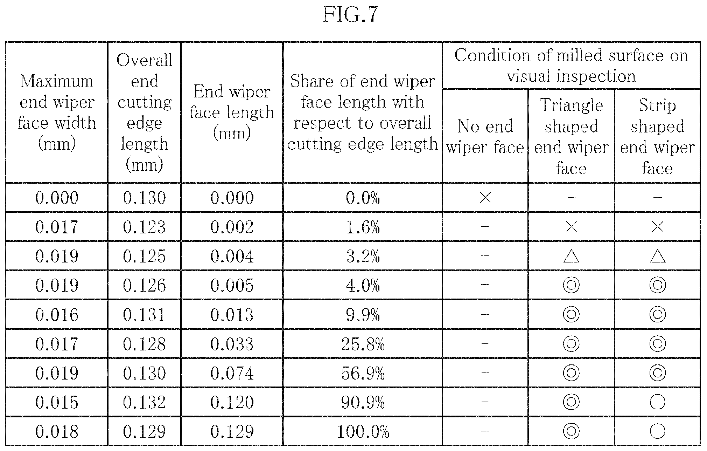

FIGs. 6 and 7 indicate a result of tests comparing surface conditions (glossiness) for milled surfaces with respect to the length of the end wiper face 4 in a direction following the end cutting edge 1 (end wiper face length) and surface conditions (glossiness) for milled surfaces produced by the cutting edge 1 with respect to the presence of changes in the width of the end wiper face 4, or expressed differently, surface conditions (glossiness) for milled surfaces produced by the end cutting edge 1 with respect to the shape of the end wiper face 4 in plan view. These tests have been performed using tools for which the width t1 at the position of the boundary between the end wiper face 4 and the corner radius wiper face 5 is set to less than 0.02 mm. The milling parameters used in these tests are as given below. Surface conditions (glossiness) were confirmed via visual inspection. Surface condition was judged in comparison with that resulting from a tool with conventional specifications without an end wiper face. The double-circle symbol is used to denote surface conditions that were glossy and for which cutting marks were not visible. The o-symbol is used to denote surface conditions that were glossy and for which cutting marks were largely not visible. The triangle symbol is used to denote surface conditions that were glossy, but for which cutting marks were visible throughout. The x-symbol is used to denote surface conditions that were equally lacking in glossiness as that resulting from a tool with conventional specifications without an end wiper face and for which cutting marks were visible.

### [Milling parameters]

Tool size: ϕ 0.4 × R 0.05 (mm)
Milling method: End milling
Spindle speed: 30,000 (rpm)
Feed rate: 100 (mm/min)
Workpiece: Hardened steel (59 HRC)

As indicated in FIGs. 6 and 7, so long as the width t1 at the position of the boundary between the end wiper face 4 and the corner radius wiper face 5 is less than 0.02 mm, it was confirmed that in cases in which the length of the end wiper face 4 in a direction following the end cutting edge 1 (end wiper face length) is greater than or equal to 4% of the overall length of the end cutting edge 1 (overall end cutting edge length), milled surfaces with good glossiness are obtained with both a substantially triangular shape and a strip shape. In addition, a comparison of the substantially triangular shape and the strip shape finds the substantially triangular shape to be superior. Specifically, it was confirmed that even when the end wiper face 4 was configured in a uniform-width strip shape, milled surfaces were able to be obtained that were sufficiently glossy and for which the surface thereof was improved compared to cases without an end wiper face, and when the length of the end wiper face in a direction running along the end cutting edge 1 (end wiper face length) was long, in other words, when in the working example the overall length of the end cutting edge 1 (overall end cutting edge length) was greater than or equal to 90.9%, locations appeared where cutting marks were visible in portions of the milled surface, and by having the width of the end wiper face 4 change so as to become narrower on progression toward the tool center side and such that the end wiper face 4 takes on a substantially triangular shape in plan view, milled surfaces with an even higher level of gloss are obtained. In FIG. 6, the photograph on the left shows a result from the prior art product, the photograph in the middle shows a result from the tool in FIG. 7 for which the share of the end wiper face length with respect to the overall end cutting edge length was 100% and the shape of the end wiper face 4 was triangle shaped, and the photograph on the right shows a result from the tool in FIG. 7 for which the share of the end wiper face length with respect to the overall cutting edge length was 100% and the shape of the end wiper face 4 was strip shaped.

From these results, it was confirmed that rather than being configured with a uniform width, it is preferable that the end wiper face 4 be formed in a triangular shape for which the width t1 at the position of the boundary with the corner radius wiper face 5 is the maximum width thereof, for which the width changes so as to become narrower on progression therefrom toward the tool center side, and for which the shape in plan view tapers off on progression toward the tool center side.

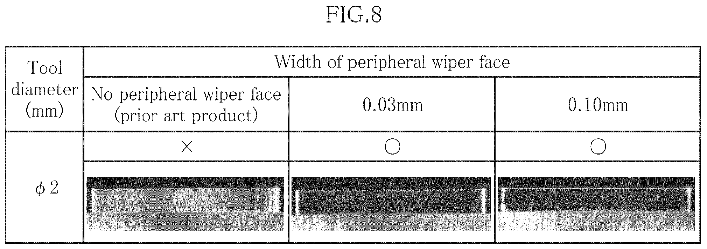

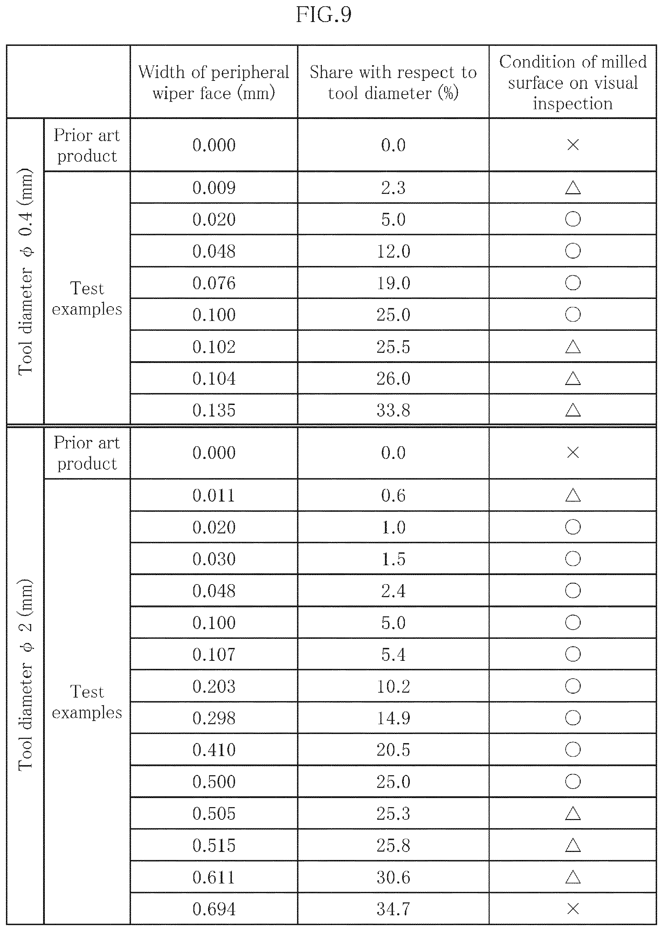

FIGs. 8 and 9 indicate a result of tests comparing surface conditions (glossiness) for milled surfaces produced by a peripheral cutting edge with respect to the width t2 of the peripheral wiper face 6. The milling parameters used in these tests are as given below. Surface conditions (glossiness) were confirmed via visual inspection. Surface condition was judged using the o-symbol to denote surface conditions with good gloss, using the triangle symbol to denote surface conditions for which although gloss was visible, the gloss was uneven, and using the x-symbol to denote surface conditions for which there was practically no gloss.

### [Milling parameters]

Tool size: ϕ 0.4 × R 0.05 / ϕ 2 × R 0.02 (mm)
Milling method: Side milling
Spindle speed: 30,000 (rpm)
Feed rate: 100 / 375 (mm/min)
Workpiece: Hardened steel (59 HRC)

As indicated in FIGs. 8 and 9, it was confirmed that in cases in which, regardless of the tool diameter, the width t2 of the peripheral wiper face 6 is greater than or equal to 0.02 mm but less than or equal to 25% of the tool diameter, good milled surfaces that are glossy are obtained.

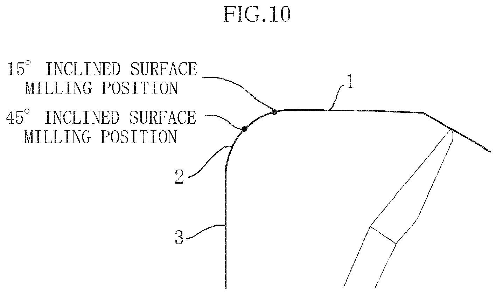

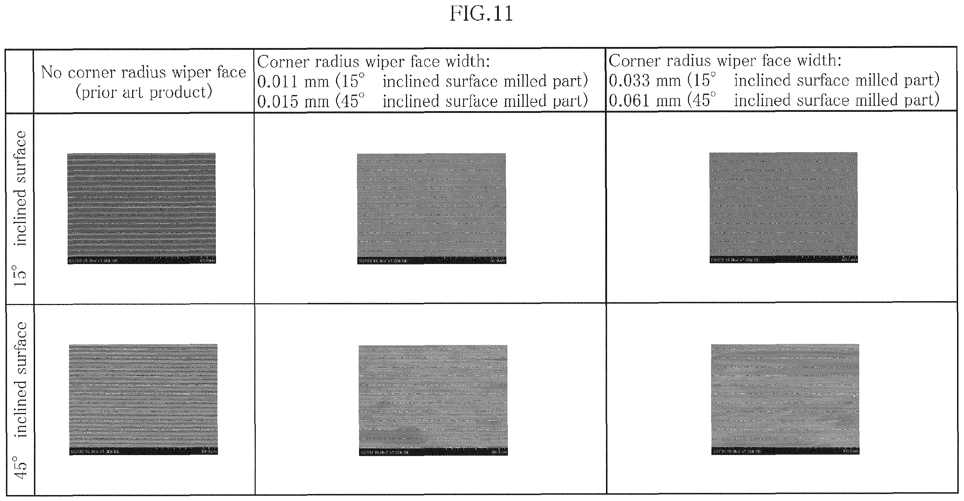

FIGs. 10 to 13 indicate a result of tests comparing surface conditions for milled surfaces produced by a corner radius cutting edge 2. When an inclined surface is milled with the corner radius cutting edge 2, the milling position on the corner radius cutting edge 2 differs according to the inclination angle of the inclined surface. FIG. 10 illustrates milling positions on a corner radius cutting edge in cases in which, with respect to a direction at a right angle to the tool axis, the inclination angle of the inclined surface is 15° (a 15° inclined surface) and 45° (a 45° inclined surface). In FIG. 11, a result of tests comparing surface conditions (glossiness and the presence of cutting marks) for milled surfaces produced by a corner radius cutting edge 2 are shown for a 15° inclined surface and a 45° inclined surface. The milling parameters used in these tests are as given below. Surface conditions (mainly, glossiness and the presence of cutting marks) were confirmed via electron scanning microscope image observations and visual inspection.

### [Milling parameters]

Tool size: ϕ 1 × R 0.1 (mm)
Milling method: Contour milling
Spindle speed: 30,000 (rpm)
Feed rate: 187.5 (mm/min)
Workpiece: Hardened steel (59 HRC)

As indicated in FIG. 11, it was confirmed that good milled surfaces that are glossy and in which cutting marks are not visible are obtained with tools having a corner radius wiper face.

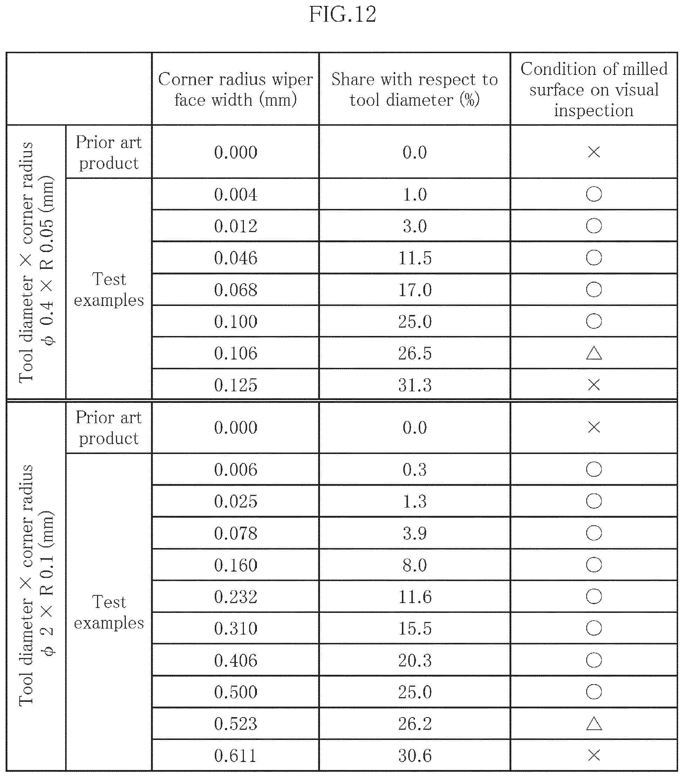

The specifications for the corner radius wiper faces 5 used in the working example are such that width in a direction at a right angle to the corner radius cutting edge narrows on progression toward the tool center side from the peripheral side (two kinds, one (in the middle of FIG. 11) for which width changes continuously from 0.010 mm (width t1 at the position of the boundary with the end wiper face 4) to 0.020 mm (width t2 at the position of the boundary with the peripheral wiper face 6), and one (on the right in FIG. 11) for which width changes continuously from 0.019 mm (width t1 at the position of the boundary with the end wiper face 4) to 0.109 mm (width t2 at the position of the boundary with the peripheral wiper face 6)). Taken together with the result of tests indicated in FIG. 12, it was confirmed that good milled surfaces that are glossy and in which cutting marks are not visible are obtained so long as the width of the corner radius wiper face 5 is greater than or equal to the width t1 of the end wiper face 4 at the corner radius cutting edge side end of (at the position of the boundary with) the end wiper face 4 but less than or equal to the width t2 of the peripheral wiper face 6 at the position of the boundary with the peripheral wiper face 6.

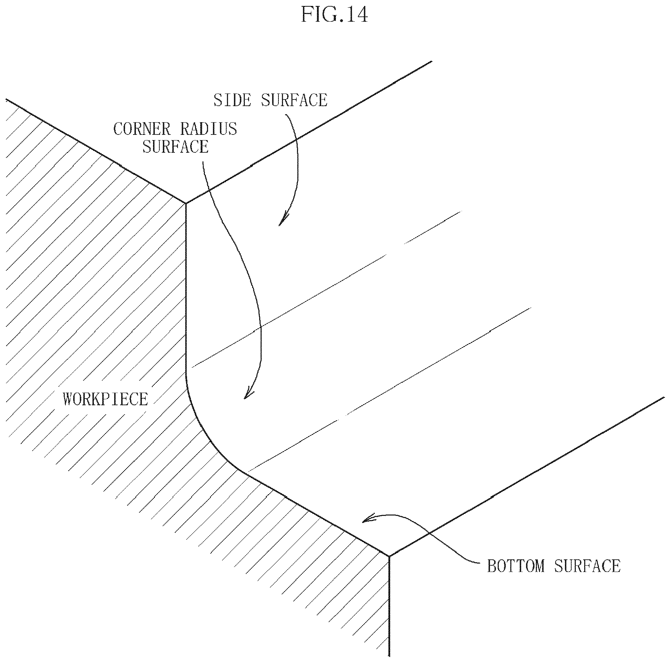

A corner radius surface milled with the corner radius cutting edge 2 (corner radius wiper face) is illustrated in FIG. 14, and will now be described. It is confirmed that by configuring the corner radius wiper face 5 such that the width at the position of the boundary with the peripheral wiper face 6 matches the width t2 of the peripheral wiper face 6, and such that the width at the position of the boundary with the end wiper face 4 matches the width t1 of the end wiper face 4 as in the specifications described in FIG. 11 (the middle and right side of FIG. 11), the joint segments of the wiper faces are made smooth, and the glossiness of milled surfaces at the positions of the boundaries between wiper faces (at the position of the corner radius surface boundary with the bottom surface and the position of the corner radius surface boundary with the side surface) is further improved. It is also confirmed that by configuring the corner radius wiper face 5 such that the width thereof in a direction at a right angle to the corner radius cutting edge on progression toward the tool center side from the peripheral side changes continuously so as to gradually become narrower, the entire corner radius surface milled with the corner radius cutting edge 2 (corner radius wiper face 5) is made into a good milled surface that is even glossier and in which cutting marks are not apparent.

FIG. 12 indicates a result of evaluations made with respect to the state of milled surface and corner radius wiper face width at a position in contact with a workpiece when a 15° inclined surface is milled with a corner radius cutting edge 2. The milling parameters used in these tests are as given below. The confirmation of surface conditions (glossiness and the presence of cutting marks) was performed via a visual inspection. Surface condition was judged in comparison with that resulting from a prior art product without a corner radius wiper face. The o-symbol is used to denote surface conditions that were glossy and for which cutting marks were not visible. The triangle symbol is used to denote surface conditions that were glossy, but for which cutting marks were visible. The x-symbol is used to denote surface conditions that were equally lacking in glossiness as that resulting from a prior art product without a corner radius wiper face and for which cutting marks were visible.

### [Milling parameters]

Tool size: ϕ 0.4 × R 0.05 / ϕ 2 × R 0.1 (mm)
Milling method: Contour milling
Spindle speed: 30,000 (rpm)
Feed rate: 100 / 375 (mm/min)
Workpiece: Hardened steel (59 HRC)

As indicated in FIG. 12, it was confirmed that so long as at least a small corner radius wiper face is present (0.004 mm for a diameter of 0.4 in the working example), a good milled surface in which cutting marks are practically not visible is obtained. It was also confirmed that the condition of the milled surfaces worsens when, similarly to the peripheral wiper face, the corner radius wiper face width exceeds 25% of the tool diameter.

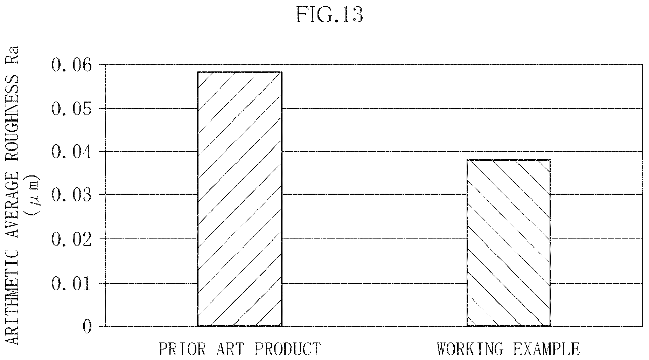

FIG. 13 indicates a result of tests comparing the arithmetic average roughness Ra of a 15° inclined surface milled using a corner radius cutting edge according to the working example and a prior art product without a corner radius wiper face. Here, in the working example, the width t1 at the boundary between the end wiper face 4 and the corner radius wiper face 5 is 0.018 mm, the width t2 at the boundary between the corner radius wiper face 5 and the peripheral wiper face 6 is 0.048 mm, and the wiper face width at the 15° inclined surface milling position is 0.023 mm. The milling parameters used in these tests are as given below.

### [Milling parameters]

Tool size: ϕ 2 × R 0.1 (mm)
Milling method: Contour milling
Spindle speed: 30,000 (rpm)
Feed rate: 375 (mm/min)
Workpiece: Hardened steel (59 HRC)

As indicated in FIG. 13, it was confirmed that for the working example, surface roughness was reduced compared to the prior art product.

It should be noted that the present invention is not limited to this working example, and the specific configuration of the constituent elements may be modified as appropriate.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A radius end mill comprising an end cutting edge (1), a corner radius cutting edge (2) that is formed contiguous with a peripheral side of the end cutting edge, and a peripheral cutting edge (3) that is formed contiguous with the corner radius cutting edge (2), **characterized in that** a corner radius wiper face (5) is provided running along the corner radius cutting edge (2) so as to be contiguous therewith, the corner radius wiper face wiping a cut surface cut by said corner radius cutting edge.

2. The radius end mill according to claim 1, **characterized in that** an end wiper face (4) is provided running along the end cutting edge (1) so as to be contiguous therewith, the end wiper face wiping a cut surface cut by said end cutting edge.

3. The radius end mill according to claim 2, **characterized in that** a width of the end wiper face (4) in a direction at a right angle to the end cutting edge is set to less than 0.02 mm.

4. The radius end mill according to claim 2 or 3, **characterized in that** the end wiper face (4) is provided contiguous with the corner radius wiper face (5), and the end wiper face narrows in width on progression toward a tool center side from a corner radius cutting edge side.

5. The radius end mill according to any one of claims 2 to 4, **characterized in that** a peripheral wiper face (6) is provided running along the peripheral cutting edge (3) so as to be contiguous therewith, the peripheral wiper face wiping a cut surface cut by said peripheral cutting edge.

6. The radius end mill according to claim 5, **characterized in that** a width of the peripheral wiper face (6) is set wider than the width of the end wiper face (4).

7. The radius end mill according to claim 5 or 6, **characterized in that** a width of the peripheral wiper face (6) in a direction at a right angle to the peripheral cutting edge (3) is set to greater than or equal to 0.02 mm but less than or equal to 25% of a tool diameter.

8. The radius end mill according to any one of claims 2 to 7, **characterized in that** the end cutting edge (1) has a first dish angle region (7) with a dish angle α and a second dish angle region (8) with a dish angle β (α<β), and the end wiper face is provided in the first dish angle region.

9. The radius end mill according to any one of claims 1 to 8, **characterized in that** the corner radius wiper face (5), in a direction at a right angle to the corner radius cutting edge (2), narrows in width on progression toward a tool center side from a peripheral side.
